# EUROPÄISCHE PATENTSCHRIFT

(11) **EP 3 686 407 B1**
(45) Veröffentlichungstag und Bekanntmachung des Hinweises auf die Patenterteilung: **22.09.2021**
(21) Anmeldenummer: 20153051.6
(22) Anmeldetag: 22.01.2020
(51) Int. Cl.: F01N 13/00, F01N 3/10, F01N 3/021, F01N 13/18, F01N 13/10

(54) **ANORDNUNG VON MINDESTENS ZWEI MOTORNAHEN ABGASANLAGENKOMPONENTEN FÜR EINE BRENNKRAFTMASCHINE EINES KRAFTFAHRZEUGS SOWIE KRAFTFAHRZEUG**
MOTOR VEHICLE AND ARRANGEMENT OF AT LEAST TWO MOTOR-ADJACENT WASTE GAS SYSTEM COMPONENTS FOR A COMBUSTION ENGINE OF A MOTOR VEHICLE
ARRANGEMENT D'AU MOINS DEUX COMPOSANTS DE SYSTÈME DE GAZ D'ÉCHAPPEMENT À PROXIMITÉ DU MOTEUR POUR UN MOTEUR À COMBUSTION INTERNE D'UN VÉHICULE À MOTEUR ET VÉHICULE À MOTEUR

(30) Priorität: 22.01.2019 DE 102019101487
(43) Veröffentlichungstag der Anmeldung: 29.07.2020
(73) Patentinhaber: Volkswagen AG, 38440 Wolfsburg (DE)
(72) Erfinder: TOMECKI, Matthias, 38106 Braunschweig (DE)
(74) Vertreter: Gulde & Partner

(56) Entgegenhaltungen:
- EP-A1- 2 650 042
- DE-A1-102016 100 151
- DE-A1-102017 102 874
- DE-A1-102018 001 426

## Beschreibung

Die Erfindung betrifft eine Anordnung von mindestens zwei motornahen Abgasanlagenkomponenten für eine Brennkraftmaschine eines Kraftfahrzeugs sowie ein Kraftfahrzeug.

Im Zuge sich verschärfender Umweltgesetzgebung ist auch die Fahrzeugindustrie bemüht, aktuelle und zukünftige Produkte sowohl während der Produktion an sich als auch während der Nutzungsphase selbst hinsichtlich verschiedener Umweltaspekte zu optimieren. Ein besonderer Aspekt während der Nutzungsphase stellt dabei die Luftreinhaltung dar. In diesem Zusammenhang sind insofern bei heutigen Kraftfahrzeugen bereits verschiedenste Abgasreinigungsverfahren und Abgasreinigungskomponenten im Einsatz. Dabei sind die Art und Form der in den Fahrzeugen eingesetzten Antriebsaggregate vielfältig und reichen von reinen Dieselaggregaten über einen klassischen Antrieb mittels eines Ottomotors hin bis zu Hybridantrieben und Elektroantrieben. Eine gängige Abgasreinigungskomponente für ein reines Dieselaggregat stellt heutzutage beispielsweise ein Partikelfilter dar. Auch für Ottomotoren sind zunehmend spezielle Partikelfilter vorgesehen.

Der Bauraum in modernen Fahrzeugen ist aufgrund der oben genannten und weiteren Anforderungen, beispielsweise in Bezug auf Sicherheitsaspekte oder dem Vorsehen von weiteren Komfortaspekten, knapp, sodass neue Fahrzeugkonzepte zunehmend kompakter gestaltet werden.

Aus dem Stand der Technik sind wie bereits gesagt verschiedenste Lösungen bekannt, welche sich mit Abgasreinigungsverfahren und Abgasreinigungskomponenten beschäftigen.

So ist aus der Druckschrift US 2011/0073088 A1 ein System zum Filtern und Oxidieren von Feststoffen, welche von einem Benzin-Direkteinspritzmotor erzeugt werden, als bekannt zu entnehmen. In einer Ausführungsform wird dabei der Luft-Kraftstoff des Motorzylinders so eingestellt, dass Ruß an einem stromaufwärtigen Partikelfilter oxidieren kann, während Abgase in einem stromabwärtigen Katalysator effizient verarbeitet werden.

Aus der Druckschrift US 2012/0304623 A1 ist zudem eine Abgasnachbehandlungsvorrichtung und ein zugehöriges Verfahren für einen Benzinmotor als bekannt zu entnehmen. Dabei umfasst in einem Beispiel eine Abgasnachbehandlungsvorrichtung für einen Ottomotor einen Filterkörper mit porösen Filterwänden, durch die Abgas fließt, um Ruß zu entfernen, wobei die porösen Filterwände ein erstes Katalysatormaterial enthalten und Bereiche der Filterwände eine Beschichtung aus einem zweiten Katalysatormaterial aufweisen. Auf diese Weise können ein Partikelfilter und ein Katalysator in einer gemeinsamen Nachbehandlungsvorrichtung bereitgestellt werden.

Aus der Druckschrift WO 2009/038221 A1 ist zudem ein Steuergerät für einen Verbrennungsmotor als bekannt zu entnehmen. Dabei ist vorgesehen, dass ein Verbrennungsmotor einen stöchiometrischen Verbrennungsbetrieb unter Steuerung des Steuergeräts vollführt, um ein stöchiometrisches Luft-Kraftstoff-Verhältnis als Grundsteuerung für ein Luft-Kraftstoff-Verhältnis bereitzustellen. Ein Partikelfilter ist in einem Auslasskanal des Motors vorgesehen, um im Abgas enthaltene Partikel aufzufangen. Wenn beurteilt wird, dass der PM-Filter eine übermäßig erhöhte Temperatur aufweist, wird eine Kraftstoffunterbrechung während einer Verzögerung verhindert. Ansonsten wird vor dem Verbot der Kraftstoffunterbrechung das Luft-Kraftstoff-Verhältnis des Abgases so gesteuert, dass die Atmosphäre des PM-Filters in eine Atmosphäre gebracht wird, die etwas magerer ist als das stöchiometrische Luft-Kraftstoff-Verhältnis.

Die Druckschrift EP 2 650 042 A1 offenbart ein Schadstoffminderungssystem und -verfahren für Fahrzeuge mit einem Benzin-Verbrennungsmotor, insbesondere einem Benzin-Direkteinspritzmotor (GDI), zur Erfüllung zukünftiger gesetzlicher Abgasvorschriften.

Aus der Druckschrift DE 10 2018 001 426 A1 ist ein Abgasnachbehandlungssystem für einen Verbrennungsmotor mit einem Katalysator und einem Partikelfilter sowie ein Verfahren zur Regeneration des Partikelfilters bekannt. Dabei wird stromaufwärts und stromabwärts des Partikelfilters ein Abgasdruck gemessen und aus der Druckdifferenz auf die Beladung des Partikelfilters sowie eine erforderliche Regeneration geschlossen.

Druckschrift DE 10 2016 100 151 A1 beschreibt ein Verfahren zum Betreiben einer Emissionsregelungsvorrichtung, die einen Katalysator und einen Partikelfilter aufweist. In einem Beispiel umfasst das Verfahren ein passives Regenerieren des Filters und ein Anpassen der Dauer der aktiven Regenerierung des Filters auf der Basis einer Sauerstoffspeicherkapazität der Emissionsregelungsvorrichtung mittels eines Controllers.

Aus der Druckschrift DE 10 2017 102 874 A1 ist eine Abgasnachbehandlungsanlage für einen Verbrennungsmotor bekannt. Die Abgasnachbehandlungsanlage ist in einem ersten Bereich stromabwärts eines Auslasses des Verbrennungsmotors einflutig ausgeführt und teilt sich stromabwärts in einem zweiten Bereich in zwei Abgasfluten auf, wobei in jeder der Abgasfluten ein Partikelfilter angeordnet ist. Auf diese Weise kann der Strömungsquerschnitt der Abgasanlage vergrößert werden und somit ein Anstieg des Abgasgegendrucks durch die Beladung eines oder mehrerer Partikelfilter zumindest abgemildert werden.

Der Erfindung liegt nun die Aufgabe zugrunde, eine Anordnung für Abgasanlagenkomponenten für eine Brennkraftmaschine eines Kraftfahrzeugs bereitzustellen, welche eine besonders kompakte Bauweise in einem Kraftfahrzeug gewährleistet.

Gemäß der Erfindung ist vorgesehen, dass eine Anordnung von mindestens zwei motornahen Abgasanlagenkomponenten für eine Brennkraftmaschine eines Kraftfahrzeugs bereitgestellt wird. Dabei sind diese mindestens zwei motornahen Abgasanlagenkomponenten stromab der Brennkraftmaschine des Kraftfahrzeugs hintereinander angeordnet und mittels eines ersten Verbindungskörpers miteinander verbunden, sodass ein Abgas der Brennkraftmaschine hintereinander durch die mindestens zwei Abgasanlagenkomponenten in Richtung einer Auspuffanlage lenkbar ist. Die zwei Abgasanlagenkomponenten sind zudem mittels eines zweiten Verbindungskörpers hinter einer Krümmervorrichtung der Brennkraftmaschine angeordnet. Eine Länge in Abgasströmungsrichtung des zweiten Verbindungskörpers beträgt erfindungsgemäß höchstens 0,07 m, insbesondere höchstens 0,03 m, vorzugsweise höchstens 0,02 m.

Mit anderen Worten beträgt eine Länge von einem Auslass der Krümmervorrichtung bis zu einem Einlass der abgasströmungsseitig zuvorderst angeordnete Abgasanlagenkomponenten höchstens 0,07 m, insbesondere höchstens 0,03 m, vorzugsweise höchstens 0,02 m. Eine besonders kompakte Bauweise in einem Kraftfahrzeug kann somit gewährleistet werden.

In weiterer bevorzugter Ausgestaltung der Erfindung ist wird ein Kraftfahrzeug bereitgestellt, welches zumindest eine Anordnung umfasst. Die zuvor genannten Vorteile gelten soweit übertragbar auch für das vorgestellte Kraftfahrzeug.

Weitere bevorzugte Ausgestaltungen der Erfindung ergeben sich aus den übrigen, in den Unteransprüchen genannten Merkmalen.

Erfindungsgemäß ist vorgesehen, dass die erste Abgasanlagenkomponente ein Drei-Wege-Katalysator ist und die zweite Abgasanlagenkomponente ein Partikelfilter, insbesondere ein Ottopartikelfilter ist, wobei der Drei-Wege-Katalysator in Abgasströmungsrichtung zuvorderst angeordnet ist und der Partikelfilter über den ersten Verbindungskörper stromab des Drei-Wege-Katalysators angeordnet ist. Eine besonders kompakte Bauweise in einem Kraftfahrzeug kann somit gewährleistet werden. Ein Abgas der Brennkraftmaschine wird somit zumindest teilweise gereinigt und/oder behandelt.

In einer bevorzugten Ausgestaltung der Erfindung vorgesehen, dass der Drei-Wege-Katalysator einen gleichgroßen oder kleineren Durchmesser als der Partikelfilter, insbesondere der Ottopartikelfilter, aufweist. Eine besonders kompakte Bauweise in einem Kraftfahrzeug kann somit noch besser gewährleistet werden. Dabei wird im Rahmen der vorliegenden Beschreibung unter einem "Durchmesser" ein Außendurchmesser der jeweiligen Komponente quer zur Abgasströmungsrichtung verstanden. Im Fall einer nichtzylindrischen Form bezeichnet der Durchmesser die größte Querschnittserstreckung der Komponente.

In einer nicht zur Erfindung gehörenden Ausgestaltung der Anordnung ist vorgesehen, dass sowohl der Drei-Wege-Katalysator als auch der Partikelfilter, insbesondere der Ottopartikelfilter, jeweils breiter als lang sind. Eine besonders kompakte Bauweise in einem Kraftfahrzeug kann somit noch besser gewährleistet werden.

Dabei beziehen sich im Rahmen der vorliegenden Beschreibung die Begriffe "lang" oder "Länge" auf die Erstreckung der jeweiligen Komponente längs der Abgasströmungsrichtung. Hingegen beziehen sich im Rahmen der vorliegenden Beschreibung die Begriffe "breit" oder "Breite" auf den (maximalen) Durchmesser quer zur Länge.

Erfindungsgemäß ist vorgesehen, dass der Drei-Wege-Katalysator länger als breit ist und der Partikelfilter, insbesondere der Ottopartikelfilter, breiter als lang ist. Eine besonders kompakte Bauweise in einem Kraftfahrzeug kann somit noch besser gewährleistet werden.

Erfindungsgemäß ist dabei vorgesehen, dass die Abmaße für den Drei-Wege-Katalysator Breite: von 0,110 bis 0,125 m x Länge: von 0,144 bis 0,157 m und für den Partikelfilter, insbesondere den Ottopartikelfilter, Breite: von 0,124 bis 0,137 m x Länge: von 0,121 bis 0,132 m betragen. Eine besonders kompakte Bauweise in einem Kraftfahrzeug kann somit noch besser gewährleistet werden.

Zudem ist in einer weiteren, nicht zur Erfindung gehörenden Ausgestaltung vorgesehen, dass der Drei-Wege-Katalysator breiter als lang ist und der Partikelfilter, insbesondere der Ottopartikelfilter, länger als breit ist. Eine besonders kompakte Bauweise in einem Kraftfahrzeug kann somit noch besser gewährleistet werden.

In einer nicht zur Erfindung gehörenden Ausgestaltung der Anordnung ist vorgesehen, dass die Abmaße für den Drei-Wege-Katalysator Breite: von 0,110 bis 0,125 m x Länge: 0,105 bis 0,120 m und für den Partikelfilter, insbesondere den Ottopartikelfilter, Breite: von 0,110 bis 0,125 m x Länge: von 0,144 bis 0,157 m betragen. Eine besonders kompakte Bauweise in einem Kraftfahrzeug kann somit noch besser gewährleistet werden.

Ferner ist in einer weiteren bevorzugten Ausgestaltung der Erfindung vorgesehen, dass der erste Verbindungskörper kleiner als der Drei-Wege-Katalysator ist und/oder wobei der erste Verbindungskörper kleiner als der Partikelfilter, insbesondere der Ottopartikelfilter, ist. Eine besonders kompakte Bauweise in einem Kraftfahrzeug kann somit noch besser gewährleistet werden. Dabei beziehen sich im Rahmen der vorliegenden Beschreibung die Begriffe "kleiner" oder "größer" auf die Volumina der jeweiligen Komponenten, insbesondere auf ihre Längen in Abgasströmungsrichtung.

Zudem ist in einer weiteren bevorzugten Ausgestaltung der Erfindung vorgesehen, dass der zweite Verbindungskörper kleiner als der Drei-Wege-Katalysator ist und/oder wobei der zweite Verbindungskörper kleiner als der Partikelfilter, insbesondere der Ottopartikelfilter, ist. Eine besonders kompakte Bauweise in einem Kraftfahrzeug kann somit noch besser gewährleistet werden.

Auch ist in einer weiteren bevorzugten Ausgestaltung der Erfindung vorgesehen, dass stromab des Drei-Wege-Katalysators und des Partikelfilters, insbesondere des Ottopartikelfilters, ein Abgasrückführ-System angeordnet ist. Eine besonders kompakte Bauweise in einem Kraftfahrzeug kann somit noch besser gewährleistet werden.

Auch ist in einer weiteren bevorzugten Ausgestaltung der Erfindung vorgesehen, dass in dem ersten Verbindungskörper zumindest eine Messeinrichtung vorgesehen ist. Diese Messeinrichtung kann dabei mindestens eine Lambdasonde umfassen. Eine besonders kompakte Bauweise in einem Kraftfahrzeug kann somit noch besser gewährleistet werden.

Schlussendlich ist in einer weiteren bevorzugten Ausgestaltung der Erfindung vorgesehen, dass in dem zweiten Verbindungskörper zumindest eine Messeinrichtung vorgesehen ist. Diese Messeinrichtung kann dabei mindestens eine Lambdasonde umfassen. Eine besonders kompakte Bauweise in einem Kraftfahrzeug kann somit noch besser gewährleistet werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen motornahen konventionellen Drei-Wege-Katalysator in einem eingebauten Zustand gemäß Stand der Technik;
- Figur 2: eine motornahe konventionelle Drei-Wege-Katalysator-Ottopartikel-Vorrichtung in einem eingebauten Zustand gemäß Stand der Technik;
- Figur 3: eine Anordnung von zwei motornahen Abgasanlagenkomponenten für eine Brennkraftmaschine eines Kraftfahrzeugs;
- Figur 4: eine weitere Anordnung von zwei motornahen Abgasanlagenkomponenten für eine Brennkraftmaschine eines Kraftfahrzeugs;
- Figur 5: eine weitere Anordnung von zwei motornahen Abgasanlagenkomponenten für eine Brennkraftmaschine eines Kraftfahrzeugs;
- Figur 6: eine weitere Anordnung von zwei motornahen Abgasanlagenkomponenten für eine Brennkraftmaschine eines Kraftfahrzeugs;
- Figur 7: eine Anordnung von zwei motornahen Abgasanlagenkomponenten für eine Brennkraftmaschine eines Kraftfahrzeugs mit Abgasrückführ-System;
- Figur 8: eine weitere Anordnung von zwei motornahen Abgasanlagenkomponenten für eine Brennkraftmaschine eines Kraftfahrzeugs;
- Figur 9: eine weitere Anordnung von zwei motornahen Abgasanlagenkomponenten für eine Brennkraftmaschine eines Kraftfahrzeugs mit Abgasrückführ-System;
- Figur 10: eine weitere Anordnung von zwei motornahen Abgasanlagenkomponenten für eine Brennkraftmaschine eines Kraftfahrzeugs mit Abgasrückführ-System;
- Figur 11: eine Seitenansicht einer Anordnung von zwei motornahen Abgasanlagenkomponenten für eine Brennkraftmaschine eines Kraftfahrzeugs mit Abgasrückführ-System;
- Figur 12: eine Anordnung von zwei motornahen Abgasanlagenkomponenten für eine Brennkraftmaschine eines Kraftfahrzeugs eingebaut in einem Hybridaggregat;
- Figur 13: eine weitere Anordnung von zwei motornahen Abgasanlagenkomponenten für eine Brennkraftmaschine eines Kraftfahrzeugs eingebaut in einem Hybridaggregat; und
- Figur 14: ein Kraftfahrzeug.

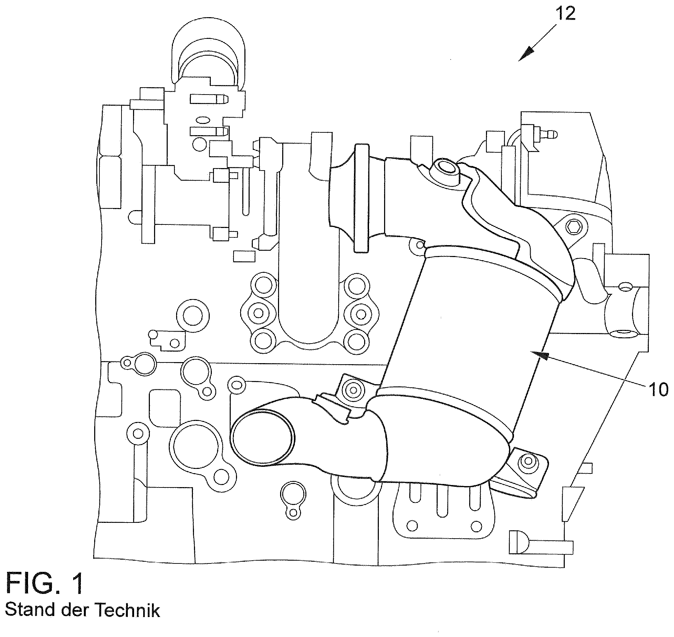

Figur 1 zeigt einen motornahen konventionellen Drei-Wege-Katalysator 10 in einem eingebauten Zustand gemäß Stand der Technik. Dabei ist in der Figur 1 lediglich eine Brennkraftmaschine 12 von einem nicht näher dargestellten Kraftfahrzeug dargestellt, in welchem dieser konventionelle Drei-Wege-Katalysator 10 eingebaut dargestellt ist.

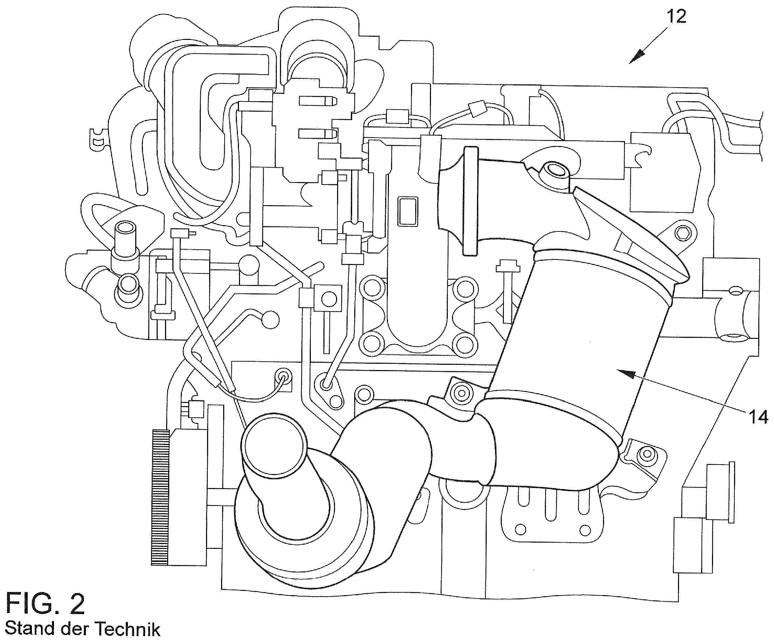

Figur 2 zeigt eine motornahe konventionelle Drei-Wege-Katalysator-Ottopartikel-Vorrichtung 14 in einem eingebauten Zustand gemäß Stand der Technik. Dabei ist in der Figur 2 lediglich eine Brennkraftmaschine 12 von einem nicht näher dargestellten Kraftfahrzeug dargestellt, in welchem diese konventionelle Drei-Wege-Katalysator-Ottopartikel-Vorrichtung 14 eingebaut dargestellt ist.

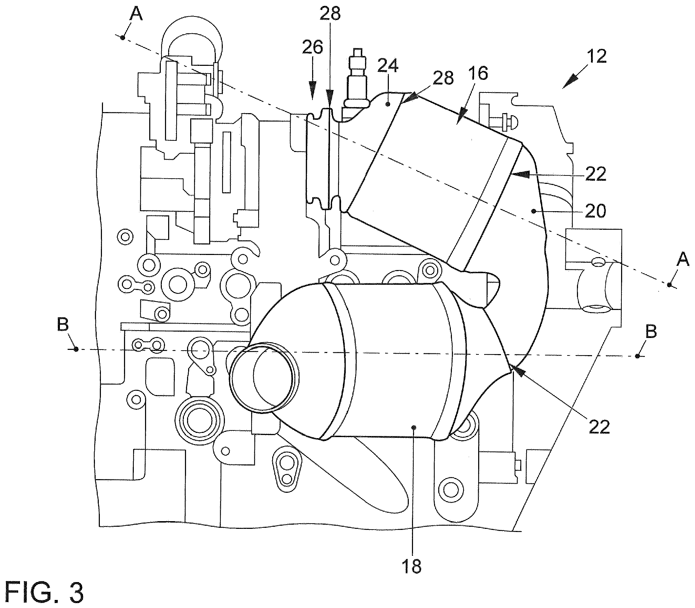

Figur 3 zeigt eine Anordnung von zwei motornahen Abgasanlagenkomponenten für eine Brennkraftmaschine 12 eines nicht näher dargestellten Kraftfahrzeugs 32. Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Die Abmaße sind dabei wie folgt: für den Drei-Wege-Katalysator Breite: 0,118364 m x Länge: 0,1143 m (diese Maße betragen in Zoll: 4,66" x 4,5") und für den Partikelfilter, insbesondere den Ottopartikelfilter, Breite: 0,13208 m x Länge: 0,1016 m (diese Maße betragen in Zoll: 5,2" x 4,0").

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der Brennkraftmaschine 12 vorzugeben. In diesem Fall ist dies eine, bezogen auf eine Bildebene, im Wesentlichen horizontale Einbaulage des Ottopartikelfilters 18 und eine oberhalb des Ottopartikelfilters 18 vorgesehene Einbaulage des Drei-Wege-Katalysators 16.

Dabei ist bezogen auf eine eingezeichnete Mittellinie A-A des Drei-Wege-Katalysators 16 eine eingezeichnete Mittellinie B-B des Ottopartikelfilters 18 um einen Winkel von etwa 30° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 30° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der Brennkraftmaschine 12 angeordnet, wobei der zweite Verbindungskörper 24 ausgelegt ist aufgrund seiner Anschlussstellen 28 eine relative Einbaulage des Drei-Wege-Katalysators 16 zu der Krümmervorrichtung 26 vorzugeben.

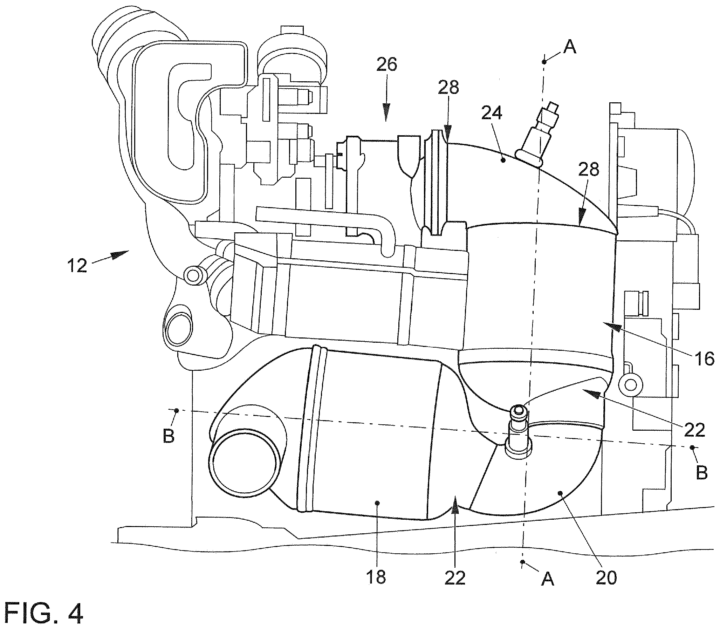

Figur 4 zeigt eine weitere Anordnung von zwei motornahen Abgasanlagenkomponenten für eine Brennkraftmaschine 12 eines Kraftfahrzeugs 32.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Die Abmaße sind dabei wie folgt: für den Drei-Wege-Katalysator Breite: 0,118364 m x Länge: 0,1143 m (diese Maße betragen in Zoll: 4,66" x 4,5") und für den Partikelfilter, insbesondere den Ottopartikelfilter, Breite: 0,13208 m x Länge: 0,1016 m (diese Maße betragen in Zoll: 5,2" x 4,0").

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der Brennkraftmaschine 12, welche in diesem Falle ein Hybridaggregat ist, vorzugeben. In diesem Fall ist dies eine, bezogen auf eine Bildebene, im Wesentlichen horizontale Einbaulage des Ottopartikelfilters 18 und eine oberhalb des Ottopartikelfilters 18 vorgesehene Einbaulage des Drei-Wege-Katalysators 16.

Dabei ist bezogen auf eine eingezeichnete Mittellinie A-A des Drei-Wege-Katalysators 16 eine eingezeichnete Mittellinie B-B des Ottopartikelfilters 18 um einen Winkel von etwa 90° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 90° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der Brennkraftmaschine 12 angeordnet, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

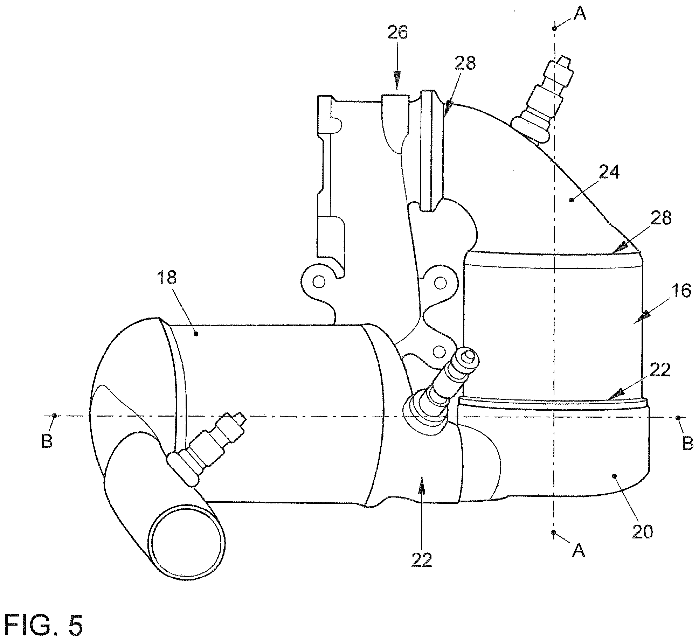

Figur 5 zeigt eine weitere Anordnung von zwei motornahen Abgasanlagenkomponenten für eine Brennkraftmaschine 12 eines Kraftfahrzeugs 32.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Die Abmaße sind dabei wie folgt: für den Drei-Wege-Katalysator Breite: 0,118364 m x Länge: 0,1143 m (diese Maße betragen in Zoll: 4,66" x 4,5") und für den Partikelfilter, insbesondere den Ottopartikelfilter, Breite: 0,118364 m x Länge: 0,1524 m (diese Maße betragen in Zoll: 4,66" x 6,0").

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nicht näher dargestellten Brennkraftmaschine vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 90° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 90° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der Brennkraftmaschine 12 angeordnet, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

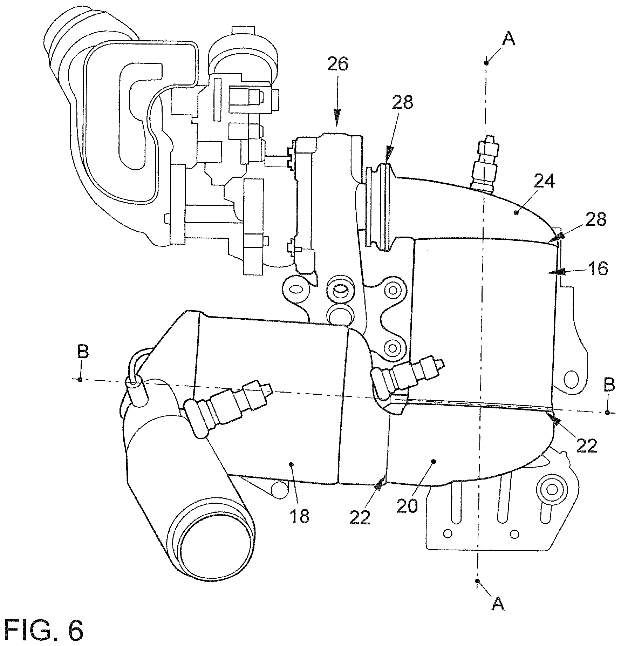

Figur 6 zeigt eine weitere Anordnung von zwei motornahen Abgasanlagenkomponenten für eine Brennkraftmaschine 12 eines Kraftfahrzeugs 32.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Die Abmaße sind dabei wie folgt: für den Drei-Wege-Katalysator Breite: 0,118364 m x Länge: 0,1524 m (diese Maße betragen in Zoll: 4,66" x 6,0") und für den Partikelfilter, insbesondere den Ottopartikelfilter, Breite: 0,13208 m x Länge: 0,127 m (diese Maße betragen in Zoll: 5,2" x 5,0").

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nicht näher dargestellten Brennkraftmaschine vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 90° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 90° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der nicht näher dargestellten Brennkraftmaschine angeordnet, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

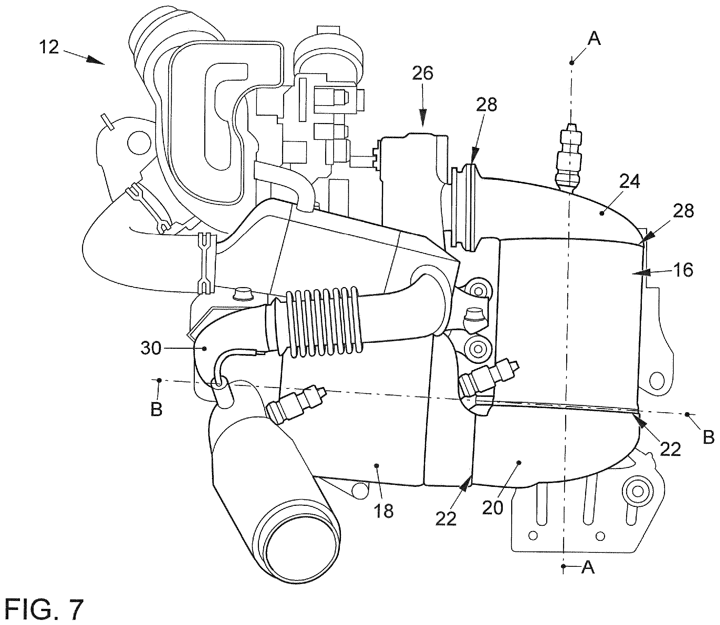

Figur 7 zeigt eine Anordnung von zwei motornahen Abgasanlagenkomponenten für eine Brennkraftmaschine eines Kraftfahrzeugs mit Abgasrückführ-System;

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Die Abmaße sind dabei wie folgt: für den Drei-Wege-Katalysator Breite: 0,118364 m x Länge: 0,1524 m (diese Maße betragen in Zoll: 4,66" x 6,0") und für den Partikelfilter, insbesondere den Ottopartikelfilter, Breite: 0,13208 m x Länge: 0,127 m (diese Maße betragen in Zoll: 5,2" x 5,0").

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nur zum Teil dargestellten Brennkraftmaschine 12 vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 90° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 90° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der nur zum Teil dargestellten Brennkraftmaschine 12 angeordnet, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

In dieser Figur 7 ist zudem ein Rückfuhrleitung 30 eines Abgasrückführ-Systems dargestellt, welches sich stromab des Ottopartikelfilters 18 angeordnet befindet.

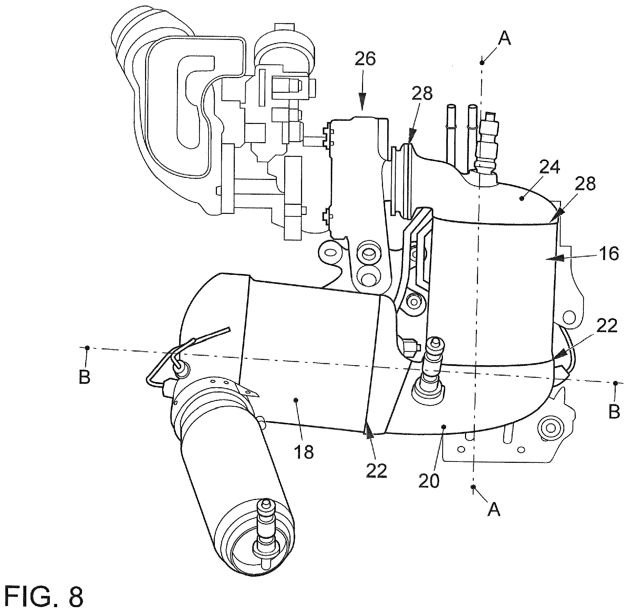

Figur 8 zeigt eine weitere Anordnung von zwei motornahen Abgasanlagenkomponenten für eine Brennkraftmaschine 12 eines Kraftfahrzeugs 32.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Die Abmaße sind dabei wie folgt: für den Drei-Wege-Katalysator Breite: 0,118364 m x Länge: 0,1524 m (diese Maße betragen in Zoll: 4,66" x 6,0") und für den Partikelfilter, insbesondere den Ottopartikelfilter, Breite: 0,13208 m x Länge: 0,127 m (diese Maße betragen in Zoll: 5,2" x 5,0").

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nur zum Teil dargestellten Brennkraftmaschine 12 vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 85° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 85° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der nur zum Teil dargestellten Brennkraftmaschine 12 angeordnet, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

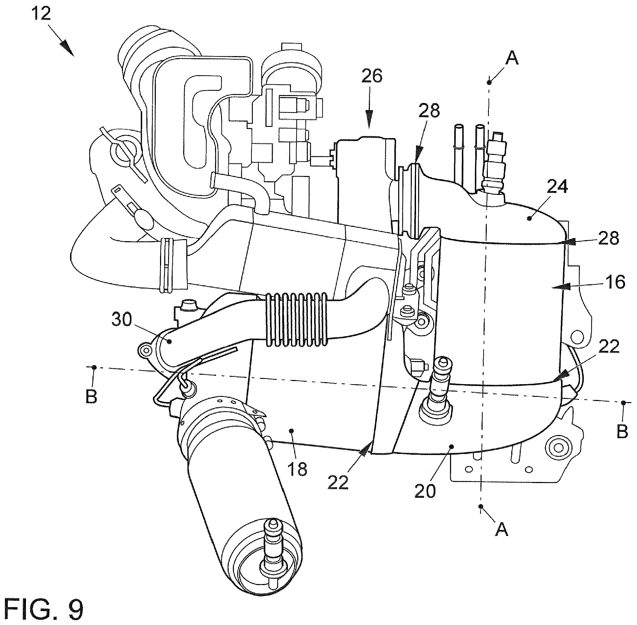

Figur 9 zeigt eine weitere Anordnung von zwei motornahen Abgasanlagenkomponenten für eine Brennkraftmaschine 12 eines Kraftfahrzeugs 32 mit Abgasrückführ-System.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nur zum Teil dargestellten Brennkraftmaschine 12 vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 85° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 85° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der nur zum Teil dargestellten Brennkraftmaschine 12, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

In dieser Figur 9 ist zudem ein Rückfuhrleitung 30 eines Abgasrückführ-Systems dargestellt, welches sich stromab des Ottopartikelfilters 18 angeordnet befindet.

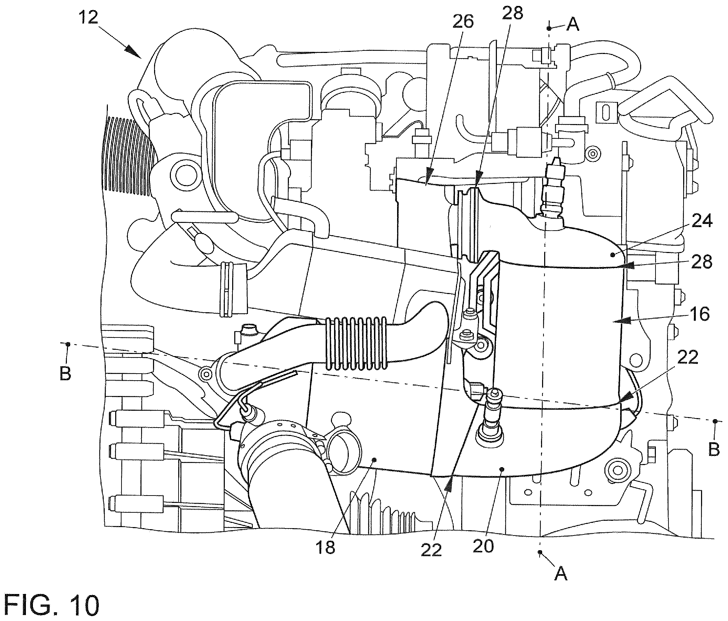

Figur 10 zeigt eine weitere Anordnung von zwei motornahen Abgasanlagenkomponenten für eine Brennkraftmaschine 12 eines Kraftfahrzeugs 32 mit Abgasrückführ-System.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der dargestellten Brennkraftmaschine 12 vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 85° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 85° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der nur zum Teil dargestellten Brennkraftmaschine 12 angeordnet, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

In dieser Figur 10 ist zudem ein Rückfuhrleitung 30 eines Abgasrückführ-Systems dargestellt, welches sich stromab des Ottopartikelfilters 18 angeordnet befindet.

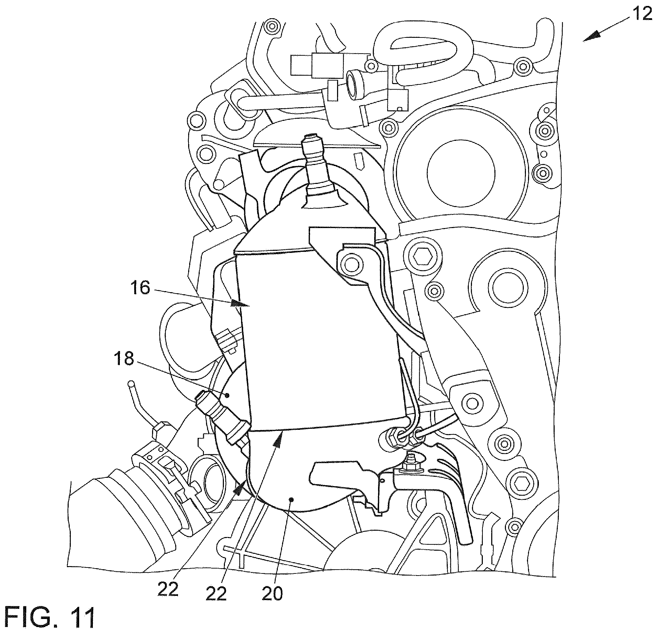

Figur 11 zeigt eine Seitenansicht einer Anordnung von zwei motornahen Abgasanlagenkomponenten für eine Brennkraftmaschine 12 eines Kraftfahrzeugs 32 mit Abgasrückführ-System.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nur zum Teil dargestellten Brennkraftmaschine 12 vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Es handelt sich bei der Figur 11 um eine Seitenansicht der in Figur 10 dargestellten Anordnung.

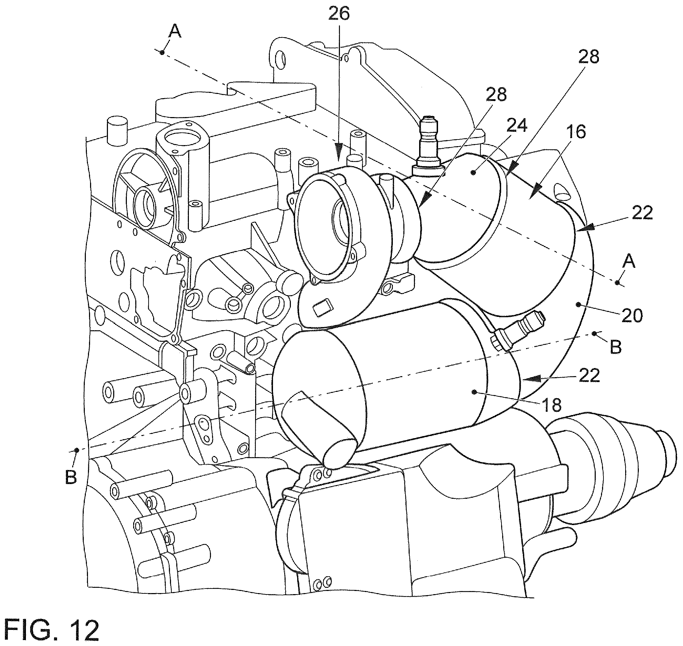

Figur 12 zeigt eine Anordnung von zwei motornahen Abgasanlagenkomponenten für eine Brennkraftmaschine 12 eines Kraftfahrzeugs 32 eingebaut in einem Hybridaggregat.

Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Die Abmaße betragen für den Partikelfilter, insbesondere den Ottopartikelfilter, Breite: 0,118364 m x Länge: 0,1524 m (diese Maße betragen in Zoll: 4,66" x 6,0").

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nur zum Teil dargestellten Brennkraftmaschine 12 vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 30° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 30° bezogen auf eine jeweilige mittlere Körperachse der jeweiligen Abgasanlagenkomponenten dargestellt.

Der Drei-Wege-Katalysator 16 ist zudem mittels eines zweiten Verbindungskörpers 24 direkt an eine Krümmervorrichtung 26 der nur zum Teil dargestellten Brennkraftmaschine 12 angeordnet, wobei der zweite Verbindungskörper 24 ausgelegt ist, aufgrund seiner Anschlussstellen 28 eine relative Einbaulage des Drei-Wege-Katalysators 16 zu der Krümmervorrichtung 26 vorzugeben.

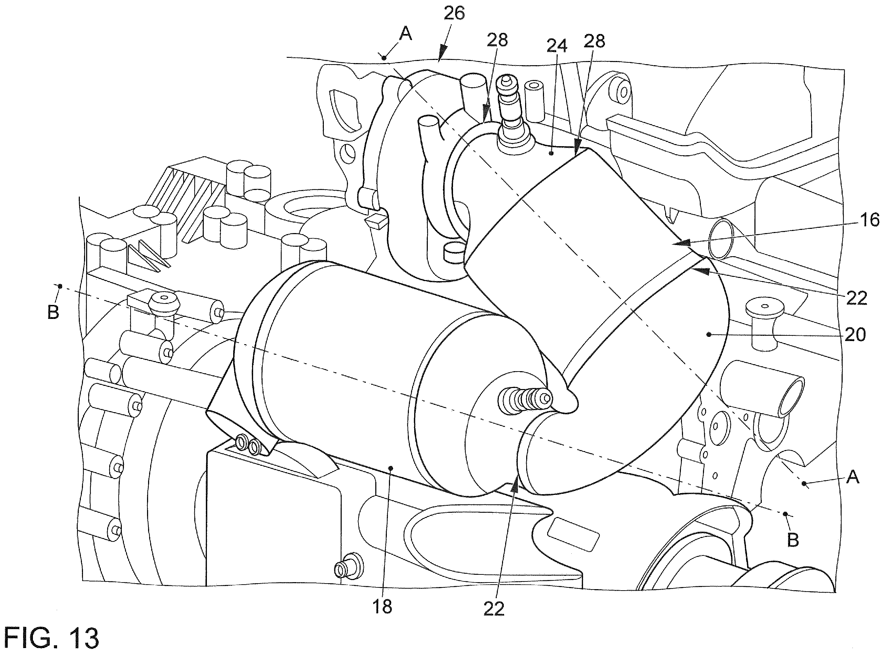

Figur 13 zeigt eine weitere Anordnung von zwei motornahen Abgasanlagenkomponenten für eine Brennkraftmaschine 12 eines Kraftfahrzeugs 32 eingebaut in einem Hybridaggregat. Eine der motornahen Abgasanlagenkomponenten ist dabei ein im Sinne der Erfindung gestalteter Drei-Wege-Katalysator 16 und die andere Komponente ist ein im Sinne der Erfindung gestalteter Ottopartikelfilter 18. Beide Abgasanlagenkomponenten weisen dabei einen im Wesentlichen zylindrischen Aufbau auf.

Der Drei-Wege-Katalysator 16 ist dabei mittels eines ersten Verbindungskörpers 20 mit dem stromab angeordneten Ottopartikelfilter 18 verbunden, wobei der erste Verbindungskörper 20 ausgelegt ist, aufgrund seiner jeweiligen Anschlussstellen 22 eine relative Einbaulage des Drei-Wege-Katalysators 16 zu dem Ottopartikelfilter 18 und/oder zu einer relativen Einbaulage der zwei motornahen Abgasanlagenkomponenten zu der nur zum Teil dargestellten Brennkraftmaschine 12 vorzugeben. In diesem Fall ist dies eine, bezogen auf eine Bildebene, im Wesentlichen horizontale Einbaulage des Ottopartikelfilters 18 und eine im Wesentlichen seitlich des Ottopartikelfilters 18 vorgesehene Einbaulage des Drei-Wege-Katalysators 16. Die Anschlussstelle 22, welche für den Drei-Wege-Katalysator 16 vorgesehen ist, weist dabei einen gleichen Durchmesser auf wie ein Durchmesser des Drei-Wege-Katalysators 16.

Bezogen auf eine eingezeichnete Mittellinie A-A des Drei-Wege-Katalysators 16 ist eine eingezeichnete Mittellinie B-B des Ottopartikelfilters 18 um einen Winkel von etwa 30° im Uhrzeigersinn versetzt dargestellt. Mit anderen Worten ist der Drei-Wege-Katalysator 16 bezogen auf den Ottopartikelfilter 18 nicht nur oberhalb des Ottopartikelfilters 18 dargestellt, sondern auch um einen Winkel von etwa 30° bezogen auf eine jeweilige mittlere Körperachse der jeweiligen Abgasanlagenkomponenten dargestellt.

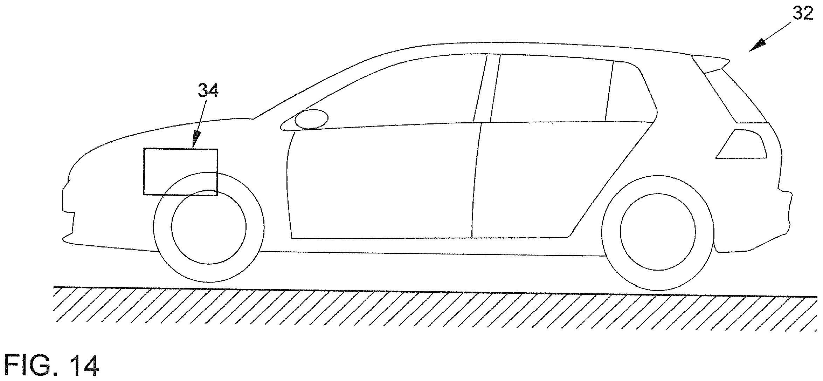

Figur 14 zeigt ein Kraftfahrzeug 32, wobei eine mögliche Einbaustelle 34 beispielsweise eine Verortung einer Anordnung gemäß Ansprüchen 1 bis 14 darstellt. Das Kraftfahrzeug 32 kann beispielsweise ein Personenkraftwagen oder ein Nutzfahrzeug sein, wobei ein jeweiliges Aggregat beziehungsweise eine jeweilig vorgesehene Brennkraftmaschine 12, welche in diesem Fall nicht näher dargestellt ist, beispielsweise ein reiner Ottomotor oder ein Hybrid-Ottomotor sein kann.

### Bezugszeichenliste

- 10: konventioneller Drei-Wege-Katalysator
- 12: Brennkraftmaschine
- 14: konventionelle Drei-Wege-Katalysator-Ottopartikel-Vorrichtung
- 16: Drei-Wege-Katalysator
- 18: Ottopartikelfilter
- 20: erster Verbindungskörper
- 22: Anschlussstelle des zweiten Verbindungskörpers
- 24: zweiter Verbindungskörper
- 26: Krümmervorrichtung
- 28: Anschlussstelle des ersten Verbindungskörpers
- 30: Rückfuhrleitung
- 32: Kraftfahrzeug
- 34: Einbaustelle
- A-A: Mittellinie des Drei-Wege-Katalysators
- B-B: Mittellinie des Ottopartikelfilters

## Patentansprüche

1. Anordnung von mindestens zwei motornahen Abgasanlagenkomponenten für eine Brennkraftmaschine (12) eines Kraftfahrzeugs (32), welche stromab der Brennkraftmaschine (12) des Kraftfahrzeugs (32) hintereinander angeordnet sind und mittels eines ersten Verbindungskörpers (20) miteinander verbunden sind, sodass ein Abgas der Brennkraftmaschine (12) hintereinander durch die mindestens zwei Abgasanlagenkomponenten in Richtung einer Auspuffanlage lenkbar ist, wobei die zwei Abgasanlagenkomponenten mittels eines zweiten Verbindungskörpers (24) hinter einer Krümmervorrichtung (26) der Brennkraftmaschine (12) angeordnet sind, und eine Länge von einem Auslass der Krümmervorrichtung (26) bis zu einem Einlass der in Abgasströmungsrichtung zuvorderst angeordnete Abgasanlagenkomponenten höchstens 0,07 m beträgt,
wobei
die erste Abgasanlagenkomponente ein Drei-Wege-Katalysator (16) und die zweite Abgasanlagenkomponente ein Partikelfilter ist, wobei der Drei-Wege-Katalysator (16) in Abgasströmungsrichtung zuvorderst angeordnet ist und der Partikelfilter über den ersten Verbindungskörper (20) stromab des Drei-Wege-Katalysators (16) angeordnet ist, **dadurch gekennzeichnet, dass**
der Drei-Wege-Katalysator (16) länger als breit ist und der Partikelfilter breiter als lang ist,
die Abmaße des Drei-Wege-Katalysators (16) wie folgt sind: Breite: 0,110 bis 0,125 m und Länge: 0,144 bis 0,157 m, und
die Abmaße des Partikelfilters wie folgt sind: Breite: 0,124 bis 0,137 m und Länge: 0,121 bis 0,132 m.

2. Anordnung nach Anspruch 1, wobei die zweite Abgasanlagenkomponente ein Ottopartikelfilter (18) ist.

3. Anordnung nach einem der vorherigen Ansprüche, wobei der Drei-Wege-Katalysator (16) einen gleichgroßen oder kleineren Durchmesser als der Partikelfilter, insbesondere der Ottopartikelfilter (18), aufweist.

4. Anordnung nach einem der vorherigen Ansprüche, wobei der erste Verbindungskörper (20) kleiner als der Drei-Wege-Katalysator (16) ist und/oder wobei der erste Verbindungskörper (20) kleiner als der Partikelfilter, insbesondere der Ottopartikelfilter (18), ist.

5. Anordnung nach einem der vorherigen Ansprüche, wobei der zweite Verbindungskörper (24) kleiner als der Drei-Wege-Katalysator (16) ist und/oder wobei der zweite Verbindungskörper (24) kleiner als der Partikelfilter, insbesondere der Ottopartikelfilter (18), ist.

6. Anordnung nach einem der vorherigen Ansprüche, wobei stromab des Drei-Wege-Katalysators (16) und des Partikelfilters, insbesondere des Ottopartikelfilters (18), ein Abgasrückführ-System angeordnet ist.

7. Anordnung nach einem der vorherigen Ansprüche, wobei in dem ersten Verbindungskörper (20) zumindest eine Messeinrichtung vorgesehen ist.

8. Anordnung nach einem der vorherigen Ansprüche, wobei in dem zweiten Verbindungskörper (24) zumindest eine Messeinrichtung vorgesehen ist.

9. Kraftfahrzeug (32) mit zumindest einer Anordnung gemäß Ansprüchen 1 bis 8.

## Claims

1. Arrangement of at least two motor-adjacent waste gas system components for a combustion engine (12) of a motor vehicle (32), which components are arranged one behind the other downstream of the combustion engine (12) of the motor vehicle (32) and are connected to one another by means of a first connecting body (20) so that a waste gas of the combustion engine (12) can be guided through the at least two waste gas system components one behind the other in the direction of an exhaust outlet system, wherein the two waste gas system components are arranged downstream of a manifold device (26) of the combustion engine (12) by means of a second connecting body (24), and a length from an outlet of the manifold device (26) to an inlet of the waste gas system component arranged at the most upstream position is at most 0.07 m,
wherein the first waste gas system component is a three-way catalytic converter (16) and the second waste gas system component is a particulate filter, wherein the three-way catalytic converter (16) is arranged at the most upstream position in the waste gas flow direction and the particulate filter is arranged via the first connecting body (20) downstream of the three-way catalytic converter (16),
**characterized in that**
the three-way catalytic converter (16) is longer than it is wide and the particulate filter is wider than it is long,
the dimensions of the three-way catalytic converter (16) are as follows: width: 0.110 to 0.125 m and length: 0.144 to 0.157 m, and
the dimensions of the particulate filter are as follows: width: 0.124 to 0.137 m and length: 0.121 to 0.132 m.

2. Arrangement according to claim 1, wherein the second waste gas system component is a gasoline particulate filter (18).

3. Arrangement according to any one of the preceding claims, wherein the three-way catalytic converter (16) has a diameter of the same size or smaller than the particulate filter, in particular the gasoline particulate filter (18).

4. Arrangement according to any one of the preceding claims, wherein the first connecting body (20) is smaller than the three-way catalytic converter (16) and/or wherein the first connecting body (20) is smaller than the particulate filter, in particular the gasoline particulate filter (18).

5. Arrangement according to any one of the preceding claims, wherein the second connecting body (24) is smaller than the three-way catalytic converter (16) and/or wherein the second connecting body (24) is smaller than the particulate filter, in particular the gasoline particulate filter (18).

6. Arrangement according to any one of the preceding claims, wherein an exhaust gas recirculation system is arranged downstream of the three-way catalytic converter (16) and of the particulate filter, in particular of the gasoline particulate filter (18).

7. Arrangement according to any one of the preceding claims, wherein at least one measuring device is provided in the first connecting body (20).

8. Arrangement according to any one of the preceding claims, wherein at least one measuring device is provided in the second connecting body (24).

9. Motor vehicle (32) having at least one arrangement according to claims 1 to 8.

## Revendications

1. Arrangement d'au moins deux composants de système de gaz d'échappement à proximité du moteur pour un moteur à combustion interne (12) d'un véhicule à moteur (32), qui sont disposés l'un derrière l'autre en aval du moteur à combustion interne (12) du véhicule à moteur (32) et qui sont reliés l'un à l'autre au moyen d'un premier corps de liaison (20), de telle sorte qu'un gaz d'échappement du moteur à combustion interne (12) peut être dirigé à travers les au moins deux composants de système de gaz d'échappement l'un après l'autre en direction d'un système d'échappement, les deux composants de système de gaz d'échappement étant disposés derrière un dispositif de collecteur (26) du moteur à combustion interne (12) au moyen d'un second corps de liaison (24), et la longueur d'une sortie du dispositif de collecteur (26) à une entrée du composant de système de gaz d'échappement disposé en premier dans le sens d'écoulement des gaz d'échappement étant de 0,07 m maximum,
le premier composant de système de gaz d'échappement étant un catalyseur à trois voies (16) et le second composant de système de gaz d'échappement étant un filtre à particules, le catalyseur à trois voies (16) étant disposé en premier dans le sens d'écoulement des gaz d'échappement et le filtre à particules étant disposé en aval du catalyseur à trois voies (16) par le biais du premier corps de liaison (20),
**caractérisé en ce que**
le catalyseur à trois voies (16) est plus long que large et le filtre à particules est plus large que long,
les dimensions du catalyseur à trois voies (16) sont les suivantes : largeur : 0,110 à 0,125 m et longueur : 0,144 à 0,157 m et
les dimensions du filtre à particules sont les suivantes : largeur : 0,124 à 0,137 m et longueur : 0,121 à 0,132 m.

2. Arrangement selon la revendication 1, dans lequel le second composant de système de gaz d'échappement est un filtre à particules Otto (18).

3. Arrangement selon l'une quelconque des revendications précédentes, dans lequel le catalyseur à trois voies (16) présente un diamètre identique ou inférieur à celui du filtre à particules, en particulier du filtre à particules Otto (18).

4. Arrangement selon l'une quelconque des revendications précédentes, dans lequel le premier corps de liaison (20) est plus petit que le catalyseur à trois voies (16) et/ou dans lequel le premier corps de liaison (20) est plus petit que le filtre à particules, en particulier le filtre à particules Otto (18).

5. Arrangement selon l'une quelconque des revendications précédentes, dans lequel le second corps de liaison (24) est plus petit que le catalyseur à trois voies (16) et/ou dans lequel le second corps de liaison (24) est plus petit que le filtre à particules, en particulier le filtre à particules Otto (18).

6. Arrangement selon l'une quelconque des revendications précédentes, dans lequel un système de recirculation des gaz d'échappement est disposé en aval du catalyseur à trois voies (16) et du filtre à particules, en particulier du filtre à particules Otto (18).

7. Arrangement selon l'une quelconque des revendications précédentes, dans lequel au moins un dispositif de mesure est prévu dans le premier corps de liaison (20).

8. Arrangement selon l'une quelconque des revendications précédentes, dans lequel au moins un dispositif de mesure est prévu dans le second corps de liaison (24).

9. Véhicule à moteur (32) comportant au moins un arrangement selon les revendications 1 à 8.
